# EUROPÄISCHE PATENTSCHRIFT

(11) **EP 0 734 895 B1**
(45) Veröffentlichungstag und Bekanntmachung des Hinweises auf die Patenterteilung: **02.12.1998**
(21) Anmeldenummer: 96104541.6
(22) Anmeldetag: 21.03.1996
(51) Int. Cl.: B60J 7/05

(54) **Fahrzeugdach**
Vehicle roof
Toit de véhicule

(30) Priorität: 01.04.1995 DE 19512342
(43) Veröffentlichungstag der Anmeldung: 02.10.1996
(73) Patentinhaber: WEBASTO KAROSSERIESYSTEME GmbH, D-82131 Stockdorf (DE)
(72) Erfinder: Reihl, Peter, 82319 Starnberg (DE); Wingen, Bernhard, 83620 Feldkirchen (DE); Salz, Wolfram, 44809 Bochum (DE); Mayer, Johann, 85238 Petershausen (DE); Danzl, Martin, 80797 München (DE); Fürst, Arpad, 82110 Germering (DE); Zirbs, Thomas, 71263 Weil der Stadt (DE)
(74) Vertreter: Wiese, Gerhard

(56) Entgegenhaltungen:
- DE-A- 3 807 961
- DE-B- 1 199 638
- FR-A- 2 205 429

## Beschreibung

Die Erfindung betrifft ein Fahrzeugdach mit einem eine Dachöffnung wahlweise verschließenden oder durch Anheben seiner Hinterkante zumindestens teilweise freigebenden, mittels einer Deckelmechanik betätigbaren Deckel, der mit wenigstens einer Kante in geschlossenem Zustand unterhalb der festen Dachhaut anliegt.

Ein derartiges Fahrzeugdach ist aus der DE-AS 11 99 638 bekannt. Bei diesem Fahrzeugdach untergreift in der geschlossenen Position die Vorderkante des Deckels die davorliegende Kante der festen Dachhaut. Die Hinterkante des Deckels liegt dagegen von oben her an einer mit dem festen Fahrzeugdach verbundenen Dichtung an. Die Sicherheit eines derartigen Deckels gegen ein Ausdrücken nach oben wird somit allein von der Mechanik bestimmt.

Aus der DE-C2-38 07 961 ist ein Lüfterdach für Fahrzeuge bekannt, bei dem der Deckel in Schließposition mit seiner Vorder- und Hinterkante das feste Fahlzeugdach untergreift. Dieser Deckel hat zwar eine hohe Sicherheit gegen ein Ausdrücken nach oben, bietet jedoch nicht die Möglichkeit einer Lüfterposition, bei der die Deckelhinterkante sich über das feste Fabrzeugdach erhebt.

Der Erfindung liegt die Aufgabe zugrunde, ein Fahrzeugdach bereitzustellen, bei dem eine Ausstellbarkeit der Deckelhinterkante gegeben ist und dennoch in geschlossener Position eine hohe Ausdrücksicherheit gegeben ist.

Diese Aufgabe wird durch die in Patentanspruch 1 angegebenen Mittel gelöst. Vorteilhafte Ausgestaltungen der Erfindung sind den Unteransprüchen zu entnehmen. Dadurch, daß der Deckel im geschlossenen Zustand mit seiner Vorderkante und seiner Hinterkante unterhalb der festen Dachhaut anliegt, wird dieser auf zwei gegenüberliegenden Seiten formschlüssig an einem ungewollten Durchtreten durch die Dachöffnung nach oben gehindert. Gleichwohl ist dieser Deckel nach Absenken und Verschieben seiner Vorderkante nach vorne durch eine geeignete Mechanik mit seiner Hinterkante über das feste Fahrzeugdach in eine Lüfterposition ausstellbar.

Gemäß einer besonders vorteilhaften Ausführungsform übt der Deckel mit seiner Vorderkante und/oder seiner Hinterkante eine Vorspannkraft auf die feste Dachhaut aus. Hierdurch wird die Möglichkeit geschaffen, daß bei einer vorgewählten Steifigkeit der aneinander angedrückten Teile das steifere Teil dem weniger steifen Teil eine vorbestimmte Kontur aufprägt. Hierdurch können die üblicherweise bei der Montage eines Fahrzeugdaches erforderlichen Einstellarbeiten zur Justierung der Höhenlage des Deckels entfallen. Als erste mögliche vorteilhafte Alternative weist hierbei der Deckel im Bereich seiner Vorderkante und/oder seiner Hinterkante eine höhere Steifigkeit auf als die Bereiche der festen Dachhaut, an denen diese anliegen. Bei dieser Ausführungsform prägt der steifere Deckel der bewußt weicheren festen Dachhaut seine Kontur auf, sodaß in geschlossener Position das gesamte Dach ein glattflächiges Erscheinungsbild bietet.

Gemäß einer anderen vorteilhaften Ausgestaltungsform weist der Deckel im Bereich seiner Vorderkante und/oder seiner Hinterkante eine geringere Steifigkeit auf als die Bereiche der festen Dachhaut, an denen diese anliegen. Hierbei prägen die Teile der festen Dachhaut, an denen der bewußt weicher gestaltete Deckel anliegt, diesem ihre Kontur auf, wobei sich wiederum bei geschlossenem Deckel insgesamt ein glattflächiges geschlossenes Erscheinungsbild des Fahrzeugdaches bietet. Als Alternativen sind auch Mischformen denkbar, beispielsweise eine festere Vorderpartie des Deckels im Zusammenspiel mit einer weicher gestalteten festen Dachhaut im Bereich der Vorderkante der Dachöffnung und gleichzeitig eine weicher gestaltete Hinterkante des Deckels im Zusammenspiel mit einer festeren Partie der diese überdeckenden festen Dachhaut oder umgekehrt.

In jedem Falle ist es vorteilhaft, wenn die Vorspannkraft mittels der Deckelmechanik aufgebracht wird. Dadurch können die aus dem Antrieb abgeleiteten Kräfte unmittelbar zur Herstellung des notwendigen Anpreßdruckes herangezogen werden und es sind keine zusätzlichen Andrückmittel erforderlich.

Gemäß einer vorteilhaften Ausgestaltung ist vorgesehen, daß die Deckelmechanik den Deckel zu Beginn einer Öffnungsbewegung gleichzeitig an der Vorderkante und an der Hinterkante absenkt. Eine solche gleichzeitig Absenkung wirkt sich vorteilhaft verschleißmindernd auf die im Bereich der Vorderkante und der Hinterkante zwischen Deckel und fester Dachhaut vorgesehenen Dichtungen aus. Nach dem Absenkvorgang ist es vorteilhaft, wenn der Deckel anschließend nach vorne verfährt und daran anschließend das Anheben der Hinterkante erfolgt. Hierdurch wird zum einen die Möglichkeit eröffnet, daß die Hinterkante des Deckels sich über die feste Dachhaut erhebt; zum anderen wird in einem Zwischenstadium eine zusätzliche Lüftungsmöglichkeit im Bereich der Deckelhinterkante geschaffen, ohne daß sich der Deckel bereits über die feste Dachhaut angehoben hat.

Vorteilhafterweise weist die Deckelmechanik ein vorderes und ein hinteres Gleitelement auf, welche zu beiden Seiten des Deckels in an sich bekannter Weise an dachfesten Führungsschienen verfahrbar sind. Das vordere und das hintere Gleitelement sind dabei vorteilhaft mittels eines Riegelsteins selbsttätig koppelbar und während einer Schwenkbewegung der Hinterkante des Deckels entkoppelbar. Besonders vorteilhaft ist es, wenn dabei der Riegelstein während einer Schwenkbewegung der Hinterkante des Deckels das vordere Gleitelement selbsttätig mit einem dachfesten Teil, wie beispielsweise der Führungsschiene, koppelt.

Gemäß einer vorteilhaften Ausgestaltung weist die Deckelmechanik einen vorderen Schwenkhebel auf, der mit seinem oberen Ende schwenkbar mit dem Deckel verbunden ist, dessen unteres Ende schwenkbar mit dem vorderen Gleitelement verbunden ist, und der mit einem dazwischen angeordneten Steuerbolzen zumindestens phasenweise mit einer zur Kontur der Führungsschienen nicht parallelen Steuerkurve in Eingriff steht.

Die Deckelmechanik umfaßt ferner vorteilhaft einen hinteren Schwenkhebel, der mit seinem oberen Ende schwenkbar und verschiebbar in einen deckelfesten Kulissenschlitz eingreift, dessen unteres Ende schwenkbar mit dem hinteren Gleitelement verbunden ist und der mit einem dazwischenliegenden Steuerbolzen zumindestens zeitweise mit einer dachfesten, zur Kontur der Führungsschiene nicht parallelen Steuerkurve in Eingriff steht. Durch das Vorsehen von dachfesten Steuerkurven für die Deckelmechanik vorne und hinten werden am Deckel selbst als bewegte Teile nur relativ leichte Mechanikteile wie Hebel oder Bolzen benötigt, sodaß die Masse der insgesamt zu bewegenden Teile reduziert wird.

Gemäß einer weiteren vorteilhaften Ausgestaltung ist vorgesehen, daß die Schwenkhebel mit ihrem oberen Ende an seitlichen Deckelträgern angelenkt sind und daß zwischen diesen und einem an der Innenseite des Deckels angeordneten Deckelinnenblech eine federnd vorgespannte Schraubverbindung zur Veränderung des Abstandes dieser Teile vorgesehen ist. Durch eine derartige federnd vorgespannte Schraubverbindung ist eine nachträgliche Justierung des Deckels, insbesondere im Bereich der Seitenkanten, möglich, in denen aufgrund eines fehlenden Untergreifens des Deckels zwangsweise kein Abgleich der Konturen des Deckels und der festen Dachhaut hergestellt werden kann.

Nachfolgend ist ein Ausführungsbeispiel der Erfindung anhand der Zeichnungen beschrieben. Es zeigt:
- Fig. 1: einen schematischen Längsschnitt durch ein Fahrzeugdach im Bereich der Führungsschienen in geschlossener Position des Deckels,
- Fig. 2: eine Darstellung entsprechend Fig. 1 mit abgesenktem Deckel zur Vorbereitung des Ausstellvorganges,
- Fig. 3: eine Darstellung entsprechend Fig. 1 mit ausgestelltem Deckel,
- Fig. 4: eine Darstellung gemäß Fig. 1 mit einem zum Vorbereiten eines Verschiebens abgesenkten Deckel,
- Fig. 5: eine Darstellung gemäß Fig. 1 mit einem nach hinten unter das feste Fahrzeugdach verschobenen Deckels,
- Fig. 6: eine vergrößerte Detaildarstellung gemäß der Einzelheit VI in Fig. 1 im Bereich der Deckelvorderkante bei steifem Deckel und elastischer Dachhaut,
- Fig. 7: eine Darstellung gemaß Fig. 6 mit abgesenkter und nach vorne verschobener Deckelvorderkante,
- Fig. 8: eine Alternative zur Fig. 6 mit steifer Dachhaut und weicher Deckelvorderkante und
- Fig. 9: einen Querschnitt durch die Seitenkante des Deckels und die feste Dachhaut zur Verdeutlichung eines automatischen Toleranzausgleichs..

Ein Fahrzeugdach weist eine insgesamt mit 1 bezeichnete feste Dachhaut auf, in der eine Dachöffnung 2 vorgesehen ist. Die Dachöffnung 2 ist mittels eines Deckels 3 verschließbar. In geschlossener Position legen sich die Vorderkante 4 und die Hinterkante 5 des Deckels 3 von unten her gegen die feste Dachhaut 1 an. Durch eine insgesamt mit 6 bezeichnete Deckelmechanik wird dabei ein Anpreßdruck des Deckels 3 an die feste Dachhaut 1 erzeugt.

Der Deckel 3 ist im Bereich seiner Vorderkante mit einem vorderen Gleitelement 7 und im Bereich seiner Hinterkante mit einem hinteren Gleitelement 8 verbunden, welche beide längs verschiebbar in einer zu beiden Seiten der Dachöffnung 2 in Fahrzeuglängsrichtung parallel zueinander angeordneten Führungsschiene 9 verschiebbar gelagert sind. Das vordere Gleitelement 7 und das hintere Gleitelement 8 sind mittels eines Riegelsteins 10 miteinander koppelbar, sodaß die mittels eines nicht dargestellten Antriebskabels in das hintere Gleitelement 8 eingeleiteten Antriebskräfte bei Kopplung der beiden Gleitelemente 7 bzw. 8 auch auf das vordere Gleitelement 7 wirken.

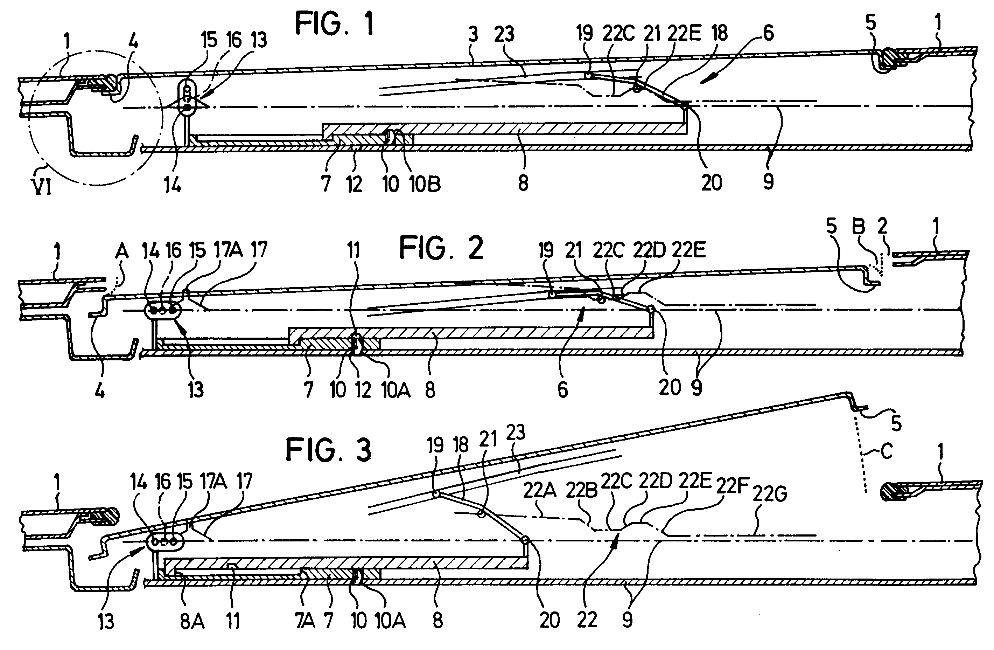

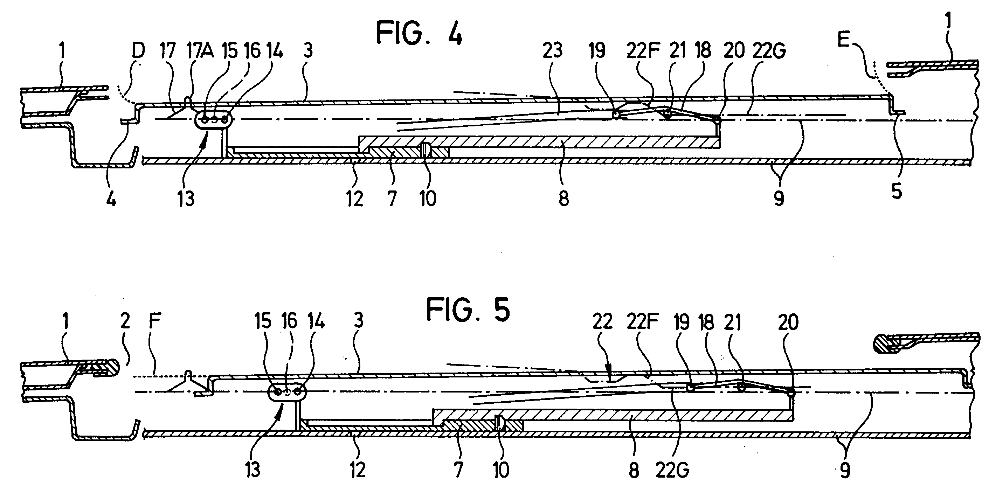

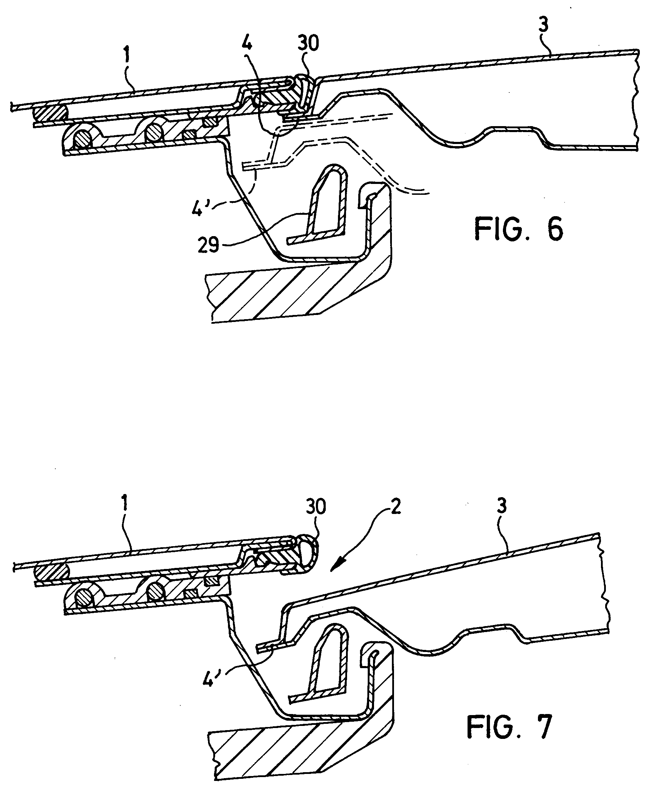

Der Riegelstein 10 ist in einer senkrecht zur Führungsschiene 9 verlaufenden Aussparung des vorderen Gleitelementes 7 verschiebbar gelagert. Bei geschlossenem Deckel 3 (Fig. 1) verbindet er das vordere Gleitelement 7 mit dem hinteren Gleitelement 8, indem er mit seinem oberen Teil in eine Aussparung 11 desselben eingreift. Bei einer Absenkbewegung des Deckels 3 zur Vorbereitung des Ausstellvorganges (Fig. 2) bewegen sich die miteinander gekoppelten Gleitelemente 7 und 8 in eine Position an der Führungsschiene 9, in der der Riegelstein 10 über einer in der Führungsschiene 9 vorgesehenen Aussparung 12 zu liegen kommt. Bei einem weiteren nach vorne Schieben des hinteren Gleitelementes 8 wird der Riegelstein 10 durch eine an seiner Oberseite angeordnete, schräg nach hinten geneigte Steuerfläche 10B von einer ebenso geneigten Steuerfläche der Aussparung 11 zwangsweise nach unten in die Aussparung 12 gedrückt, wodurch das hintere Gleitelement 8 vom vorderen Gleitelement 7 entkoppelt und gleichzeitig das vordere Gleitelement 7 mit der Führungsschiene 9 als einem dachfesten Teil gekoppelt wird. Dadurch wird beim Ausstellen der Hinterkante 5 des Deckels 3 (Fig. 3) eine im Bereich der Vorderkante 4 des Deckels angeordnete Schwenkachse (unterer Anlenkpunkt 14 eines vorderen Schwenkhebels 13) bezüglich des festen Fahrzeugdaches in einer stabilen Position gehalten. Bei einem nach hinten Verfahren des hinteren Gleitelementes 8 aus der in Fig. 3 dargestellten Position über die in Fig. 2 dargestellte Position in die Schließlage gemäß Fig. 1 wird der Riegelstein 10 bei Erreichen der in Fig. 2 dargestellten Position durch Anlaufen eines Anschlages 8A am hinteren Gleitelement 8 an einen Anschlag 7A am vorderen Gleitelement sowie mittels einer am unteren Ende des Riegelsteins 10 angeordneten, nach hinten schräg ansteigenden Steuerfläche 10A im Zusammenwirken mit einer ebenso geneigten Steuerfläche der Aussparung 12 aus der Aussparung 12 nach oben angehoben und in die Aussparung 11 am hinteren Gleitelement 8 eingeführt, wodurch das vordere Gleitelement 7 und das hintere Gleitelement 8 wiederum gekoppelt sind. In diesem gekoppelten Zustand verbleiben das vordere Gleitelement 7 und das hintere Gleitelement 8 auch bei einem Absenken des Deckels 3 (Fig. 4) und einem anschließenden Verschieben des Deckels 3 nach hinten unter die feste Dachhaut 1 (Fig. 5).

Die Absenkmechanik 6 des Deckels 3 umfaßt im Bereich der Deckelvorderkante 4 einen vorderen Schwenkhebel 13, der mit einem unteren Anlenkpunkt 14 schwenkbar am vorderen Gleitelement 7 befestigt ist. Der vordere Schwenkhebel 13 ist ferner mit einem oberen Anlenkpunkt am Deckel 3 oder einem mit diesem fest verbundenen Teil schwenkbar befestigt. Zwischen unterem Anlenkpunkt 14 und oberen Anlenkpunkt 15 befindet sich am vorderen Schwenkhebel 13 ein Steuerbolzen 16, der mit einer dachfesten Steuerkurve 17 in Eingriff steht. Die Steuerkurve 17 hat eine kuppenförmige Ausbildung mit einer nach vorne abfallenden und einer nach hinten abfallenden Flanke, die durch einen ausgerundeten Teil miteinander verbunden sind. Über diesem ausgerundeten Teil der Steuerkurve 17 ist ferner eine nach unten geöffnete U-förmige Ausnehmung 17A vorgesehen, die ebenfalls dachfest angeordnet ist. Bei geschlossenem Deckel (Fig. 1) steht der bolzenförmige obere Anlenkpunkt 15 des vorderen Schwenkhebels 13 im Eingriff mit dieser Aussparung 17A. Gleichzeitig befindet sich der Steuerbolzen 16 am höchsten Punkt der Ausrundung der Steuerkurve 17. Wenn das vordere Gleitelement 7, angetrieben vom hinteren Gleitelement 8 aus der in Fig. 1 dargestellten Position in die in Fig. 2 dargestellte Position nach vorne geschoben wird, wird dabei der vordere Schwenkhebel 13 mit seinem unteren Anlenkpunkt 14 auf einer zur Führungsschiene 9 parallelen Bahn nach vorne bewegt. Der Steuerbolzen 16 durchfährt dabei die nach vorne abfallende Flanke der Steuerkurve 17 und kippt den vorderen Schwenkhebel 13 in eine nach hinten geneigte Position, bei der gleichzeitig der obere Anlenkpunkt 15 außer Eingriff mit der Aussparung 17A gerät. Beim Erreichen der in Fig. 2 dargestellten Position ist der vordere Schwenkhebel 13 aus der der ursprünglich vertikalen in eine annähernd horizontale Position gekippt worden, bei der unterer Anlenkpunkt 14, Steuerbolzen 16 und oberer Anlenkpunkt 15 in etwa auf derselben Höhe liegen. Beim Zurückverfahren des vorderen Gleitelementes in die Schließposition gemäß Fig. 1 sorgt der Steuerbolzen 16 durch das Durchfahren der ansteigenden vorderen Flanke der Steuerkurve 17 für ein Aufrichten des vorderen Schwenkhebels 13 und ein sicheres Einführen des oberen Anlenkpunktes 15 in die Aussparung 17A.

Bei einem Verfahren des vorderen Gleitelementes 7 aus der geschlossenen Position (Fig. 1) in eine abgesenkte Position zur Vorbereitung einer Verschiebung des Deckels 3 nach hinten unter die feste Dachhaut (Fig. 4) wird der untere Anlenkpunkt 14 durch das vordere Gleitelement aus der in Fig. 1 dargestellten Position nach hinten gezogen. Dabei durchfährt der Steuerbolzen 16 die nach hinten abfallende Flanke der Steuerkurve 17 und legt dabei den vorderen Schwenkhebel 13 aus der vertikalen Position in eine nach vorne geneigte Position um, bei der der obere Anlenkpunkt 14 gleichzeitig aus der Aussparung 17A austritt. In vollständig abgesenktem Zustand des Deckels 3 nimmt der vordere Schwenkhebel 13 eine nunmehr nach vorne gekippte, jedoch ebenfalls annähernd horizontale Lage ein, bei der wiederum der obere Anlenkpunkt 15, der Steuerbolzen 16 und der untere Anlenkpunkt 14 in etwa auf derselben Höhe liegen. Diese Position behält der vordere Schwenkhebel 13 auch während eines Verfahrens des Deckels 3 nach hinten unter die feste Dachhaut bei (Fig. 5). Beim Verfahren des Deckels von hinten her in die Schließposition durchläuft der Steuerbolzen 16 die nunmehr nach vorne ansteigende rückwärtige Flanke der Steuerkurve 17 und stellt dabei den vorderen Schwenkhebel 13 nach vorne auf wobei gleichzeitig der obere Anlenkpunkt 15 sicher in die Aussparung 17A eingeführt wird.

Im hinteren Bereich umfaßt die Deckelmechanik 6 einen hinteren Schwenkhebel 18, der mit einem oberen Anlenkpunkt 19 schwenkbar und verschiebbar in einen am Deckel 3 oder an einem fest mit dem Deckel 3 verbundenen Teil vorgesehenen Kulissenschlitz 23 eingreift. Der hintere Schwenkhebel 18 ist ferner mit einem unteren Anlenkpunkt 20 schwenkbar mit dem hinteren Gleitelement 8 verbunden. Zwischen oberem Anlenkpunkt 19 und unterem Anlenkpunkt 20 weist der hintere Schwenkhebel 18 einen Steuerbolzen 21 auf, der mit einer dachfesten, insgesamt mit 22 bezeichneten Steuerkurve im Eingriff steht. Die Steuerkurve 22 weist verschiedenartig geneigte Abschnitte 22A bis 22G auf. Der in Fahrtrichtung vorne liegende erste Abschnitt 22A weist von vorne kommend eine leicht nach hinten geneigte gerade Kontur auf. Diese geht in einen kurzen, stärker nach hinten abfallend geneigten Abschnitt 22B über. An diesen schließt sich ein parallel zur Führungsschiene 9 liegender gerader Abschnitt 22C an. Dieser geht in einen nach hinten ansteigenden kurzen Abschnitt 22D über, an den sich ein kurzer gerader Abschnitt 22E anschließt. Auf diesen folgt ein stärker nach hinten abfallend geneigter Abschnitt 22F, der schließlich in einen tiefer als der Abschnitt 22C liegenden, jedoch ebenfalls parallel zur Führungsschiene 9 angeordneten geraden Abschnitt 22G übergeht.

Im geschlossenen Zustand des Deckels 3 (Fig. 1) liegt der Steuerbolzen 21 im Bereich des Abschnittes 22E der Steuerkurve 22 und der obere Anlenkpunkt 19 im hinteren Bereich des Kulissenschlitzes 23. Beim Übergang von der in Fig. 1 in die in Fig. 2 dargestellte Position wird das hintere Gleitelement 8 vom nicht dargestellten Antrieb nach vorne verfahren, wodurch sich gleichzeitig der untere Anlenkpunkt 20 um einen Betrag nach vorne bewegt. Der Steuerbolzen 21 durchfährt dabei zunächst die nach vorne abfallende Flanke des Abschnitts 22D und anschließend den geraden Abschnitt 22C der Steuerkurve 22. Der obere Anlenkpunkt 19 bewegt sich dabei gleichzeitig im Kulissenschlitz 23 um einen Betrag nach vorne. Durch das gleichzeitige weiter vorne beschriebene Absenken der Vorderkante 4 des Deckels 3 mittels des vorderen Schwenkhebels 13 wird eine überlagerte Bewegung erzeugt, die an der Vorderkante ein bogenförmiges Absenken der Deckelvorderkante 4 gemäß der punktierten Kurvenbahn A in Fig. 2 erzeugt. Die Hinterkante 5 des Deckels 3 führt dabei gleichzeitig eine Absenkbewegung und eine Schwenkbewegung gemäß der punktiert in Fig. 2 dargestellten Kurvenbahn B aus.

Für das anschließende Ausstellen der Hinterkante 5 des Deckels 3 über die feste Dachhaut 1 (Fig. 3) entlang der Kurvenbahn C wird der untere Anlenkpunkt 20 des hinteren Schwenkhebels 18 durch das hintere Gleitelement 8 um einen weiteren Betrag nach vorne verfahren. Dabei durchläuft gleichzeitig der Steuerbolzen 21 nacheinander zunächst den stärker geneigten, nach vorne ansteigenden Abschnitt 22B und anschließend den längeren, jedoch flacher geneigten Abschnitt 22A der Steuerkurve 22. Der obere Anlenkpunkt 19 des hinteren Schwenkhebels 18 gleitet gleichzeitig im Kulissenschlitz 23 weiter nach vorne und stellt dadurch den Deckel 3 mit dessen Hinterkante 5 nach oben aus. Beim Absenken der Deckelhinterkante aus der in Fig. 3 dargestellten Position in die Schließposition gemäß Fig. 1 erfolgen alle vorstehend dargestellten Bewegungen in umgekehrter Weise.

Beim Absenken des Deckels 3 zur Vorbereitung eines Verschiebevorganges nach hinten wird der untere Anlenkpunkt 18 mittels des hinteren Gleitelementes 8 ausgehend von der Schließposition gemäß Fig. 1 um einen Betrag nach hinten verfahren (Fig. 4). Dabei durchfährt der Steuerbolzen 21 ausgehend von seiner Position im Abschnitt 22E zunächst den stärker nach hinten geneigten Abschnitt 22F und anschließend den geraden Abschnitt 22G der Steuerkurve 22. Der hintere Schwenkhebel 18 wird dabei in eine nach vorne geneigte nahezu horizontale Position bewegt. Gleichzeitig gleitet der obere Anlenkpunkt 19 des hinteren Schwenkhebels 18 im Kulissenschlitz 23 nach hinten und senkt dabei die Hinterkante 5 des Deckels 3 unter die feste Dachhaut 1 ab. Die dabei von der Hinterkante 5 erzeugte Kurvenbahn ist mit E in der Fig. 4 punktiert angedeutet. Die gleichzeitig von der Vorderkante 4 erzeugte Kurvenbahn ist ebenfalls punktiert mit D angedeutet. In dieser Lage erfolgt durch den nicht dargestellten Antrieb ein weiteres Verfahren des hinteren Gleitelementes 8 und des mittels des Riegelsteins 10 mit diesem gekoppelten vorderen Gleitelementes 7, wobei sich Deckelhinterkante 5 und Deckelvorderkante 4 auf einer zur Führungsschiene 9 parallelen Bahn nach hinten bewegen. Diese ist in Fig. 5 punktiert mit F angedeutet.

Im Teillängsschnitt gemäß Fig. 6 ist in einer ersten Ausgestaltungsform der Deckel 3 im Bereich seiner Vorderkante relativ steif ausgelegt und der Bereich der festen Dachhaut 1, unterhalb dem der Deckel 3 im Schließzustand anliegt, relativ elastisch ausgebildet. Hierbei übt der Deckel 3 durch einen von der Ausstellmechanik 6 unmittelbar erzeugten Anpreßdruck eine im Bereich einer Dichtung 30 von unten her auf die feste Dachhaut 1 wirkende Kraft aus, der zufolge sich die feste Dachhaut 1 der Kontur des Deckels 3 anpaßt. Die Deckelvorderkante ist zusätzlich im abgesenkten und nach vorne verfahrenen Zustand gemäß Fig. 2 in der Fig. 6 mit 4' gestrichelt dargestellt. Unter der Vorderkante 4 des Deckels 3 ist ein Windabweiser 29 vorgesehen, der erst bei nach hinten verfahrenem Deckel 3 gemäß Fig. 4 und 5 wirksam wird und in bekannter Weise an der Vorderkante der Dachöffnung 2 über die feste Dachhaut 1 ausgestellt wird. Die Darstellung in Fig. 7 entspricht in detaillierterer Form der in Fig. 3 dargestellten Position der Deckelvorderkante 4, wobei hier wiederum die Deckelvorderkante mit 4' bezeichnet ist. Statt einer Anordnung der Dichtung 30 am festen Fahrzeugdach kann alternativ ebenso eine Anordnung einer Dichtung am Deckel 3 vorgesehen sein.

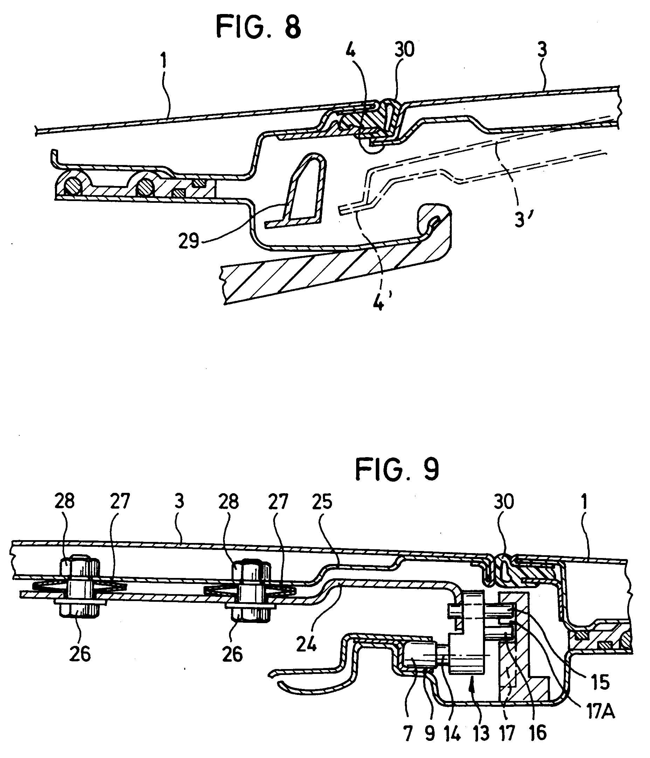

Bei der alternativen Ausführungsform gemäß Fig. 8 ist der Deckel 3 im Bereich seiner Vorderkante weicher ausgebildet als die darüberliegende Partie der festen Dachhaut 1.

Aufgrund von deren steiferer Ausbildung prägt diese dem Deckel 3, der von der Deckelmechanik 6 nach oben an die feste Dachhaut 1 angedrückt wird, ihre Kontur auf.

Da bei einem erfindungsgemäßen Fahrzeugdach ein Untergreifen der festen Dachhaut nur im Bereich der Vorderkante 4 und der Unterkante 5 des Deckels erfolgt, kann je nach Wölbung des Fahrzeugdaches im Bereich der Seitenkanten des Deckels 3 eine zusätzliche Höheneinstellung zur Erreichung eines glattflächigen bündigen Ausrichtens des Deckels 3 und der festen Dachhaut 1 bei geschlossener Position des Deckels 3 erforderlich sein. Hierzu ist gemäß Fig. 9 der Deckel 3 im Bereich seiner Seitenkanten mit einem Deckelinnenblech 25 fest verbunden. Die Deckelmechanik 6 ist ihrerseits an einem Deckelträger 24 angelenkt. An der Oberseite des Deckelinnenbleches 25 sind Schweißmuttern 28 angeordnet, in welche von der Unterseite des das Deckelinnenblech 25 untergreifenden Deckelträgers 24 Bundschrauben 26 eindrehbar sind. Zwischen Deckelträger 24 und Deckelinnenblech 25 sind um die Bundschrauben 26 herum Tellerfedern 27 angeordnet, sodaß insgesamt eine federnd vorgespannte, einstellbare Verschraubung des Deckelinnenbleches 25 mit dem Deckelträger 24 zum Ausgleich von deren gegenseitiger Höhenlage geschaffen wird.

### Bezugszeichenliste

- 1: (feste) Dachhaut
- 2: Dachöffnung
- 3, 3': Deckel
- 4, 4': Vorderkante (von 3)
- 5: Hinterkante (von 3)
- 6: Deckelmechanik
- 7: vorderes Gleitelement
- 7A: Anschlag (an 7)
- 7B: Anschlag (an 8)
- 8, 8A: hinteres Gleitelement
- 9: Führungsschiene
- 10: Riegelstein
- 10A,10B: Steuerfläche (an 10)
- 11: Ausnehmung (an 8)
- 12: Ausnehmung (an 9)
- 13: vorderer Schwenkhebel
- 14: unterer Anlenkpunkt (von 13)
- 15: oberer Anlenkpunkt (von 13)
- 16: Steuerbolzen (an 13)
- 17, 17A: Steuerkurve (an 9)
- 18: hinterer Schwenkhebel
- 19: oberer Anlenkpunkt (an 18)
- 20: unterer Anlenkpunkt (an 18)
- 21: Steuerbolzen (an 18)
- 22: Steuerkurve
- 22 A-G: Abschnitte (von 22)
- 23: Kulissenschlitz
- 24: Deckelträger
- 25: Deckelinnenblech
- 26: Bundschrauben
- 27: Tellerfedern
- 28: Schweißmuttern
- 29: Windabweiser
- 30: Dichtung
- A-F: Kurvenbahnen bei Verstellung des Deckels 3

## Patentansprüche

1. Fahrzeugdach mit einem eine Dachöffnung (2) wahlweise verschließenden oder durch Anheben seiner Hinterkante zumindestens teilweise freigebenden, mittels einer Deckelmechanik betätigbaren Deckel (3), der mit wenigstens einer Kante in geschlossenem Zustand unterhalb der festen Dachhaut (1) anliegt, **dadurch gekennzeichnet**, daß der Deckel (3) in geschlossenem Zustand mit seiner Vorderkante (4) und seiner Hinterkante (5) unterhalb der festen Dachhaut (1) anliegt.

2. Fahrzeugdach nach Anspruch 1, **dadurch gekennzeichnet**, daß der Deckel (3) mit seiner Vorderkante (4) und/oder seiner Hinterkante (5) eine Vorspannkraft auf die feste Dachhaut (1) ausübt.

3. Fahrzeugdach nach Anspruch 2, **dadurch gekennzeichnet**, daß der Deckel (3) im Bereich seiner Vorderkante (4) und/oder seiner Hinterkante (5) eine höhere Steifigkeit aufweist als die Bereiche der festen Dachhaut (1), an denen diese anliegen.

4. Fahrzeugdach nach Anspruch 2, **dadurch gekennzeichnet**, daß der Deckel (3) im Bereich seiner Vorderkante (4) und/oder seiner Hinterkante (5) eine geringere Steifigkeit aufweist als die Bereiche der festen Dachhaut (1), an denen diese anliegen.

5. Fahrzeugdach nach einem der Ansprüche 2 bis 4, **dadurch gekennzeichnet**, daß die Vorspannnkraft mittels der Deckelmechanik (6) aufgebracht wird.

6. Fahrzeugdach nach wenigstens einem der vorhergehenden Ansprüche, **dadurch gekennzeichnet**, daß die Deckelmechanik (6) den Deckel (3) zu Beginn einer Öffnungsbewegung gleichzeitig an der Vorderkante (4) und an der Hinterkante (5) absenkt.

7. Fahrzeugdach nach Anspruch 6, **dadurch gekennzeichnet**, daß die Deckelmechanik (6) bei einem Ausstellvorgang den Deckel (3) anschließend an das Absenken nach vorne verfährt und daran anschließend das Anheben der Hinterkante (5) erfolgt.

8. Fahrzeugdach nach wenigstens einem der vorhergehenden Ansprüche, **dadurch gekennzeichnet**, daß die Deckelmechanik (6) ein vorderes und ein hinteres Gleitelement (7 bzw. 8) umfaßt, welche zu beiden Seiten des Deckels (3) an dachfesten Führungsschienen (9) verfahrbar sind.

9. Fahrzeugdach nach Anspruch 8, **dadurch gekennzeichnet**, daß das vordere und das hintere Gleitelement (7 bzw. 8) mittels eines Riegelsteins (10) selbsttätig koppelbar und während einer Schwenkbewegung der Hinterkante (5) des Deckels (3) entkoppelbar sind.

10. Fahrzeugdach nach Anspruch 9, **dadurch gekennzeichnet**, daß der Riegelstein (10) während einer Schwenkbewegung der Hinterkante (5) des Deckels (3) das vordere Gleitelement (7) selbsttätig mit einem dachfesten Teil (Führungsschiene 9) koppelt.

11. Fahrzeugdach nach wenigstens einem der vorhergehenden Ansprüche, **dadurch gekennzeichnet**, daß die Deckelmechanik (6) einen vorderen Schwenkhebel (13) umfaßt, der mit seinem oberen Ende (15) schwenkbar mit dem Deckel (3) verbunden ist, dessen unteres Ende (14) schwenkbar mit dem vorderen Gleitelement (7) verbunden ist und der mit einem dazwischen angeordneten Steuerbolzen (16) zumindestens phasenweise mit einer zur Kontur der Führungsschienen (9) nicht parallelen Steuerkurve (17) in Eingriff steht.

12. Fahrzeugdach nach wenigstens einem der vorhergehenden Ansprüche, **dadurch gekennzeichnet**, daß die Deckelmechanik (6) einen hinteren Schwenkhebel (18) umfaßt, der mit seinem oberen Ende (19) schwenkbar und verschiebbar in einen deckelfesten Kulissenschlitz (23) eingreift, dessen unteres Ende (20) schwenkbar mit dem hinteren Gleitelement (8) verbunden ist und der mit einem dazwischenliegenden Steuerbolzen (21) zumindestens zeitweise mit einer dachfesten, zur Kontur der Führungsschiene (9) nicht parallelen Steuerkurve (22) in Eingriff steht.

13. Fahrzeugdach nach wenigstens einem der vorhergehenden Ansprüche, **dadurch gekennzeichnet**, daß die Schwenkhebel (13, 18) mit ihrem oberen Ende (15 bzw. 19) an seitlichen Deckelträgern (24) angelenkt sind und daß zwischen diesen und einem an der Innenseite des Deckels (3) angeordneten Deckelinnenblech (25) eine federnd vorgespannte Schraubverbindung (Bundschrauben 26) zur Veränderung des Abstandes dieser Teile (24, 25) vorgesehen ist.

## Claims

1. A vehicle roof with a cover (3) adapted to be actuated by a cover mechanism and optionally closing a roof aperture (2) or at least partially opening it by raising its rear edge, said cover (3) having at least one edge which fits under the fixed roof skin (1), characterised in that in the closed state, the cover has its front edge (4) and its rear edge (5) under the fixed roof skin (1).

2. A vehicle roof according to claim 1, characterised in that the front edge (4) and/or rear edge (5) of the cover (3) exerts a pretensioning force on the fixed roof skin (1).

3. A vehicle roof according to claim 2, characterised in that in the region of its front edge (4) and/or rear edge (5), the cover (3) has a greater rigidity than the area of fixed roof skin (1) against which these edges bear.

4. A vehicle roof according to claim 2, characterised in that in the region of its front edge (4) and/or rear edge (5), the cover (3) has less rigidity than the area of fixed roof skin (1) against which these edges bear.

5. A vehicle roof according to one of claims 2 to 4, characterised in that the pretensioning force is applied by the cover mechanism (6).

6. A vehicle roof according to at least one of the preceding claims, characterised in that at the start of an opening movement, the cover mechanism (6) lowers the cover (3) simultaneously at the front edge (4) and at the rear edge (5).

7. A vehicle roof according to claim 6, characterised in that in the case of a push-out movement, and following on from lowering, the cover mechanism (6) moves the cover (3) forwards and then raises the rear edge (5).

8. A vehicle roof according to at least one of the preceding claims, characterised in that the cover mechanism (6) comprises a front and a rear sliding element (7, 8) respectively which are adapted for movement on guide rails (6) rigid with the roof and provided on both sides of the cover (3).

9. A vehicle roof according to claim 8, characterised in that the front and the rear driving elements (7, 8) respectively can be automatically coupled by a locking member (10) and then uncoupled during a pivoting movement of the rear edge (5) of the cover (3).

10. A vehicle roof according to claim 9, characterised in that during a pivoting movement of the rear edge (5) of the cover (3), the locking member (10) couples the front sliding element (7) automatically to a part (guide rail 9) rigid with the roof.

11. A vehicle roof according to at least one of the preceding claims, characterised in that the roof mechanism (6) comprises a front pivot lever (13) of which the upper end (5) is pivotally connected to the cover (3), of which the bottom end (14) is pivotally connected to the front sliding element (7) and in that the control pin (16) disposed between them is at least phasewisely engaged with a control cam (17) which is not parallel with the contours of the guide rails (9).

12. A vehicle roof according to at least one of the preceding claims, characterised in that the cover mechanism (6) comprises a rear pivot lever (18) of which the upper end (19) pivotally and displaceably engages a connecting link slot (23) rigid with the cover and of which the bottom end (20) is pivotally connected to the rear sliding element (8) and, through an interposed control pin (21), at least from time to time engages a control cam (22) rigid with the roof and not parallel with the contours of the guide rail (9).

13. A vehicle roof according to at least one of the preceding claims, characterised in that the pivot levers (13, 18) have their upper end (15, 19) articulated on lateral cover carriers (24) and in that between them and an inner plate (25) of the cover disposed on the inside of the cover (3) there is a resiliently pretensioned screwed connection (collar screws 26) for varying the distance between these parts (24, 25).

## Revendications

1. Toit de véhicule équipé d'un couvercle (3) qui peut à volonté être actionné par un mécanisme pour obturer une ouverture de toit (2) ou la libérer au moins en partie par relèvement de son bord arrière, ce couvercle, lorsqu'il est en position de fermeture ayant au moins un bord en appui en dessous du toit fixe (1),
caractérisé en ce que
le couvercle (3), en position de fermeture, a son bord avant (4) et son bord arrière (5) en appui en dessous du toit fixe (1).

2. Toit de véhicule selon la revendication 1,
caractérisé en ce que
le couvercle (3) exerce une force de tension sur le toit fixe (1), par son bord avant (4) et/ou son bord arrière (5).

3. Toit de véhicule selon la revendication 2,
caractérisé en ce que
le couvercle (3) dans la zone de son bord avant (4) et/ou de son bord arrière (5) est plus rigide que les parties du toit fixe (1) sur lesquelles il est en appui.

4. Toit de véhicule selon la revendication 2,
caractérisé en ce que
le couvercle (3), dans la zone de son bord avant (4) et/ou de son bord arrière (5) est moins rigide que les parties du toit fixe (1), sur lesquelles il est en appui.

5. Toit de véhicule selon une des revendications 2 à 4,
caractérisé en ce que
la force de tension est produite par le mécanisme du couvercle (6).

6. Toit de véhicule selon au moins une des revendications précédentes,
caractérisé en ce que
le mécanisme (6) du couvercle au début d'un mouvement d'ouverture, abaisse le couvercle en même temps le long de son bord avant (4) et le long de son bord arrière (5).

7. Toit de véhicule selon la revendication 6,
caractérisé en ce que
le mécanisme (6) du couvercle pour relever le couvercle, l'abaisse d'abord en le déplaçant vers l'avant, puis soulève le bord arrière (5) du couvercle.

8. Toit de véhicule selon l'une des revendications précédentes,
caractérisé en ce que
le mécanisme (6) du couvercle comprend des éléments glissants avant et arrière respectivement (7, 8) qui peuvent se déplacer en direction des deux côtés du couvercle (3) sur des rails de guidage (9) solidaires du toit.

9. Toit de véhicule selon la revendication 8,
caractérisé en ce que
les éléments glissants (7, 8) peuvent être accouplés automatiquement entre eux par un coulisseau de verrouillage (10), et désaccouplés pendant le basculement du bord arrière (5) du couvercle (3).

10. Toit de véhicule selon la revendication 9,
caractérisé en ce que
le coulisseau de verrouillage (10), pendant que le bord arrière (5) du couvercle (3) bascule, s'accouple automatiquement avec une partie solidaire du toit (rail de guidage 9).

11. Toit de véhicule selon une des revendications précédentes,
caractérisé en ce que
le mécanisme (6) de couvercle comprend un levier basculant (13) situé en avant et dont l'extrémité supérieure (15) est reliée par une articulation de basculement au couvercle (3) tandis que son extrémité inférieure (14) est reliée par une articulation de basculement à l'élément avant de glissement (7), un pivot de commande (16) situé entre les deux articulations étant en prise, au moins pendant certaines phases, avec une piste de commande (17) qui n'est pas parallèle au contour des rails de guidage (9).

12. Toit de véhicule selon une des revendications précédentes,
caractérisé en ce que
le mécanisme (6) de couvercle comprend un levier de basculement (18) situé en arrière et dont l'extrémité supérieure (19) est en prise, avec possibilité de basculement et de glissement, dans une piste de coulissement (23) solidaire du toit, tandis que son extrémité inférieure (20) est reliée par une articulation de basculement à l'élément arrière de glissement (8), un pivot de commande (21) situé entre les deux articulations étant en prise, au moins à certains moments, avec une piste de commande (22) solidaire du toit mais non parallèle au contour du rail de guidage (9).

13. Toit de véhicule selon une des revendications précédentes,
caractérisé en ce que
les leviers basculants (13, 18) sont articulés par leurs extrémités supérieures respectives (15, 19) à des supports latéraux du toit (24), une liaison par vissage sous tension élastique (vis à collet 26) étant prévue entre ces supports et une tôle interne de couvercle (25) située sur la face interne du couvercle (3), pour faire varier la distance séparant ces pièces (24, 25).
